Europäisches Patentamt

European Patent Office

Office européen des brevets

(11) Publication number: **0 087 093**
**B1**

(12) **EUROPEAN PATENT SPECIFICATION**

(45) Date of publication of patent specification: **16.09.87**

(21) Application number: **83101369.3**

(22) Date of filing: **12.02.83**

(51) Int. Cl.⁴: **G 01 N 23/00**

(54) Petroleum stream analyzer.

(30) Priority: **24.02.82 US 351699**

(43) Date of publication of application:
**31.08.83 Bulletin 83/35**

(45) Publication of the grant of the patent:
**16.09.87 Bulletin 87/38**

(84) Designated Contracting States:
**DE FR GB IT NL**

(56) References cited:
**EP-A-0 007 759**
**GB-A-2 071 312**
**US-A-4 209 695**
**US-A-4 354 110**
**US-A-4 365 154**

(73) Proprietor: **TEXACO DEVELOPMENT CORPORATION**
**2000 Westchester Avenue**
**White Plains New York 10650 (US)**

(72) Inventor: **Richter, Albert Paul, Jr.**
**8339 Sharpcrest**
**Houston Texas 77036 (US)**
Inventor: **Campsey, Ronald Lynn**
**P.O. Box 35**
**Alief Texas 77411 (US)**
Inventor: **Paap, Hans Jürgen**
**8939 Altamont Drive**
**Houston Texas 77401 (US)**
Inventor: **Bussian, Alfred Erich**
**25103 Spring Creek**
**Spring Texas 77380 (US)**

(74) Representative: **Schupfner, Gerhard D.**
**Müller, Schupfner & Gauger Karlstrasse 5**
**Postfach 14 27**
**D-2110 Buchholz/Nordheide (DE)**

Courier Press, Leamington Spa, England.

## Description

The present invention relates to a petroleum stream analyzer as described in the preamble of claim 1.

In EP—A1—00 07 759 a petroleum stream analyzer of the afore-mentioned kind is disclosed in which the neutron source, a shadow shield, a sodium iodide crystal and a photomultiplier tube are disposed in a measuring module which is arranged in a test chamber such that its axis is aligned with the axial flow of the petroleum in the test chamber.

A petroleum stream analyzer of the afore-mentioned kind is also described in GB—A—20 71 312. In said analyzer the shielding material provided in the intervening space between the neutron source and the detector thermalizes but does not capture neutrons. The source and the detector may be mounted along a common axis within a line forming the test chamber.

It is the main object of the present invention to improve a petroleum stream analyzer of the above mentioned kind such that the bombarding means, the shielding means and the detector means are reliably held within the test chamber and are readily removable therefrom.

This object is achieved by the invention as characterized in claim 1.

Further objects and advantages of the invention will appear more fully hereinafter from the detail description which follows, taken together with the accompanying drawings wherein true embodiments of the invention are illustrated by way of example. It is to be expressly understood, however, that the drawings are for illustration purposes only and are not to be construed as defining the limits of the invention.

Figure 1 is a simplified block diagram of a petroleum stream analyzer constructed in accordance with the present invention.

Figure 2 is a detailed drawing of the test chamber shown in Figure 1.

Relatively small concentrations of salt in crude oil can often cause major problems in the crude oil refining process. The present invention relates to the detection in a flowing crude oil stream or other petroleum conduit of concentrations of salt. The present invention is based upon the bombardment or irradiation of a flowing stream of crude oil with neutrons and the detection of gamma radiation admitted by the element chlorine upon capture of thermal neutrons. For a given thermal neutron flux, the yield of chlorine capture radiation is proportional to the concentration of chlorine in the flowing stream of crude oil. If it is known or assumed that all chlorine is in the form of NaCl, or other chloride form, then the intensity of chlorine captured radiation is a direct indication of salt concentration.

Gamma radiation resulting from thermal capture reactions is "prompt" in the sense that it is admitted within microseconds after the capture event. This is in contrast to "delayed" gamma radiation resulting from "activation" type reactions which is admitted from milliseconds to years after the reaction. Since thermal neutron capture radiation is almost instantaneous, the velocity and volume flow rate of the crude oil stream do not effect the measurement.

A salt-in-crude monitor such as disclosed and described in U.S. Patent Nos. 4,209,695 and 4,200,789 involve the use of the foregoing radiation techniques in determining the salt content in a production stream of crude oil. The present invention is an improvement of the inventions of those patents by utilizing an in-line test tapping chamber.

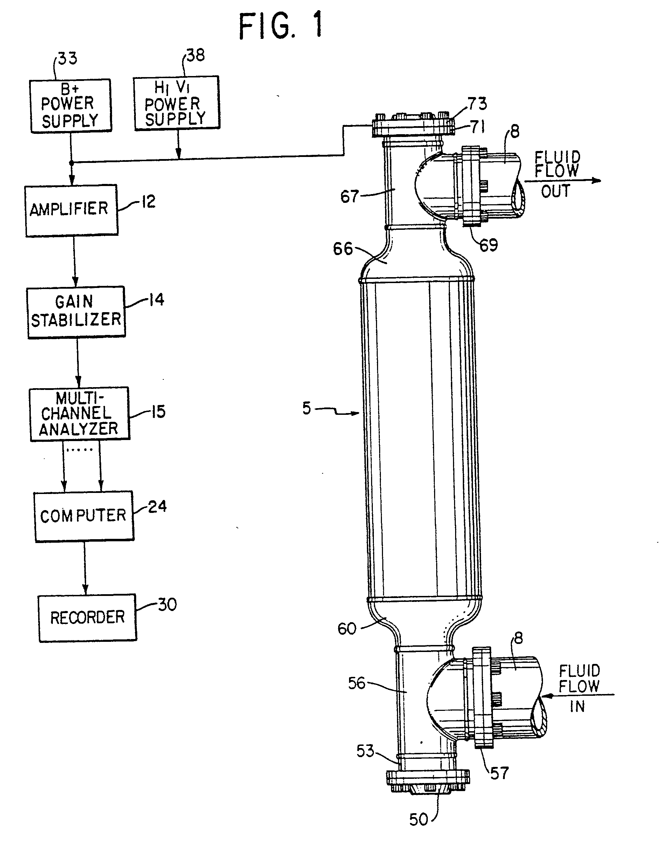

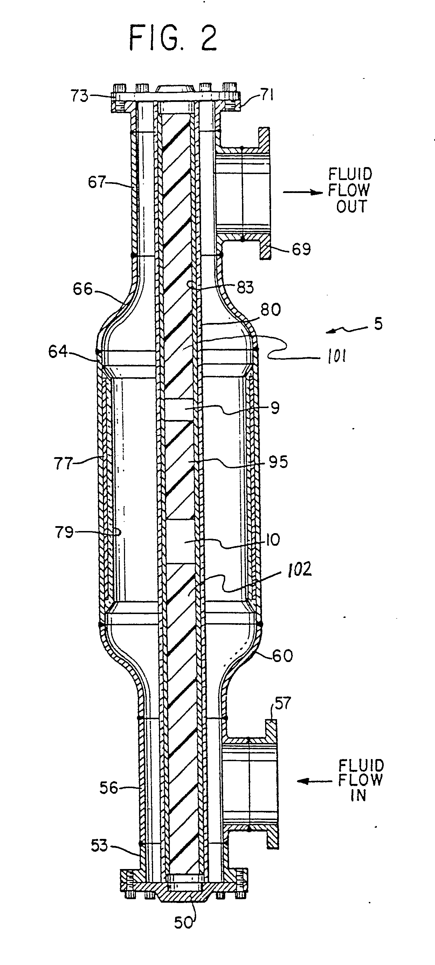

Referring now to Figure 1 a production stream of crude oil flows through a pipe line 8 which is connected to a test chamber 5 and out again through another pipe line 8. Test chamber 5 has within it a neutron source 9 and a gamma ray detector assembly 10. Neutron source 9 irradiates the production stream with neutrons. Gamma ray detector assembly 10 provides pulses corresponding in height and frequency to the detected gamma radiation. Detector assembly 10 periodically provides reference pulses. The pulses from detector assembly 10 are provided to an amplifier 12. It should be noted that the wires connecting detector assembly 10 to amplifier 12 are not shown in Figure 2 so that the details of construction of test chamber 5 can best be shown. The output is amplified and provided to a gain stabilizer 14 which in turn provides the stabilized signal to a multi-channel analyzer 15. Multi-channel analyzer 15 provides a plurality of signals corresponding to the test counts of various levels of energy. The signals from the multi-channel analyzer 15 are provided to a computer 24 which provides its output to a recorder 30. The details of operation of amplifier 12, gain stabilizer 14, multi-channel analyzer 15, computer 24 and recorder 30 are fully described in the foregoing patents and are not necessary to an understanding of the present invention. A B+ power supply 33 and a high voltage power supply 38 provide the necessary operating voltages to neutron source 9 and gamma ray detector assembly 10.

With reference to Figure 2, test chamber 5 includes an end cap 50 affixed to an adaptor 53 which is welded to a T fitting 56. Another adaptor 57 is also welded to T fitting 56 and the remaining opening of T fitting 56 is welded to a bell reducer 60. A length of iron pipe 64, adapted as hereinafter explained, is welded to bell reducer 60 and to another bell reducer 66. Bell reducer 66 is in turn welded to a T fitting 67 having an adaptor 69 welded to it for connection to pipe line 8. Another adapter 71 is also welded to T fitting 67 for connection to an end plate 73.

Pipe 64 has mounted on its internal side, boron carbide ($B_4C$) layer 77 which in turn has an epoxy glass lining 79 coated thereon on it. Due to boron's large thermal neutron capture cross-section, the boron carbide layer effectively shields iron pipe 64 from neutrons thermalized (slowed down) within the petroleum stream. Thermal neutron capture gamm ray energies from boron are less than about .514 ev whereas those from iron extend into the high energy region where the thermal capture gamma rays from chlorine and sulfur are measured. Therefore, without the shielding action of the boron carbide layer the gamma rays from the iron pipe would contribute a substantial "background noise" to the energy levels at which the monitor of the aforementioned U.S. patents monitors the chlorine and sulfur gamma rays. This "background noise" would interfere with the accurate determination of chlorine and sulfur within the petroleum stream and essentially would prevent their determination of low levels of chlorine and sulfur altogether.

End plate 73 has affixed to it an epoxy glass sleeve 80 with an internal boron carbide sleeve 83. If more rigidity is desired, a steel sleeve may be inserted inside of boron carbide sleeve 83. Mounted within the passageway is a neutron source 9, shielding material 95 and a gamma ray detector assembly 10. Shielding material 95 is made from machineable hard plastic coated with boron carbide on its surfaces. Neutron source 9 and detector assembly 10 are maintained in a predetermined position within boron carbide sleeve 83 by shielding material 101 and 102. Again shielding material 101 and 102 are made from machineable hard plastic coated with boron carbide on its surfaces. The electrical connections for neutron source 9 and the gamma ray detector assembly 10 are not shown for convenience. In operation, with the petroleum stream flowing through it, neutron source 9 is activated and bombards the petroleum stream which yields gamma radiation as hereinbefore explained. Gamma ray detector assembly 10 detects the gamma radiation and provides an output signal in accordance with detected gamma rays for the analysis of the salt content of the production stream as set forth in the aforementioned U.S. patents.

The test chambers disclosed in the foregoing U.S. patents use the fluid to be measured as a shield between detector and source. As the hydrogen index of the fluid decreases, e.g. increasing gas content, the fluid loses its neutron moderating and gamma ray shielding characteristics. This loss of shielding allows neutrons with source energies and/or near source energies and gamma rays from the source to reach the detector and contribute to undesirable background effects. The present invention uses shielding material to prevent direct transmission of above neutrons and gamma rays to the detector.

The present invention allows easy change of spacing between neutron source 9 and gamma ray detector assembly 10 to optimize measurement of fluids with various neutron moderating (hydrogen index) characteristics. The spacing is controlled or changed by changing the length of shielding material 95 between source 9 and assembly 10 whereas in the aforementioned U.S. Patents, the distance is fixed. Further, at the very least, a change in the size of the test chamber would be required to change the spacing. The aforementioned U.S. Patents use the petroleum stream itself as the shielding material. The present invention improves upon this by using special shielding material which can be exchanged to optimize the response for various crudes and parameters to be measured.

It should also be noted that the present invention allows the simultaneous use of more than one detector spaced at different distances from the source. The responses of the detectors can then be combined to obtain fluid characteristics such as hydrogen index or gas content by ratio methods.

**Claims**

1. A petroleum stream analyzer comprising
—a test chamber (5) having a petroleum stream, or a portion thereof, flowing through it,
—means (9) for bombarding the petroleum stream in the test chamber (5) with fast neutrons, which are slowed down and thereafter engaged in thermal-neutron capture reactions with materials in the petroleum stream,
—means (10, 12, 14, 15) for obtaining gamma-ray energy spectra of the materials in response to the capture of the thermal-neutrons by the materials in the petroleum stream,
—shielding means (95) for shielding at least part of said obtaining means (10, 12, 14, 15) from neutrons provided by said bombarding means (9), and
—means (24) for deriving a measure of a characteristic of the petroleum stream in accordance with the obtained gamma-ray energy spectra of the materials in the petroleum stream,
—housing means (80, 83) provided for housing the bombarding means (9), the shielding means (95) and part of the obtaining means (10, 12, 14, 15), said housing means (80, 83) being located in said test chamber (5) in a manner so that a longitudinal axis of said housing means (80, 83) passes through said part of the obtaining means (10, 12, 14, 15), shielding means (95) and bombarding means (9), and is substantially aligned with the axial flow of the petroleum stream in said test chamber (5),
characterized in that
—the test chamber (5) includes a shell (53, 56, 60, 64, 66, 67, 71), at least two adaptor means (57, 69) affixed to the shell (53, 56, 60, 64, 66, 67, 71) for passing the petroleum stream, or a portion thereof, into and out of the shell, and at least two end plates (50, 73) affixed to opposite ends of said shell (53, 56, 60, 64, 66, 67, 71),
—the housing means (80, 83) is affixed to one end plate (73) so that the housing means (80, 83) is readily removable from said end plate (73) and the one end plate (73) is affixed to said shell (53, 56, 60, 64, 66, 67, 71) so that the end plate (73) and the housing means (80, 83) are readily removable from said shell (53, 56, 60, 64, 66, 67, 71), and
—the housing means (80, 83) is made of epoxy glass and has an inner lining (83) of boron carbide and has a length sufficient to reach from the one end plate (73), that the housing (80, 83) is affixed to, butt up against the other end plate (50) so that the housing means (80, 83) is held rigidly in place within said shell (53, 56, 60, 64, 66, 67, 71).

2. An analyzer as described in claim 1, characterized in that
—the shell (53, 56, 60, 64, 66, 67, 71) has one inner lining (77) of boron carbide and another inner lining (79) of epoxy glass arranged with the boron carbide lining (77) so that the boron carbide lining (77) is between the expoxy glass lining (79) and said shell (53, 56, 60, 64, 66, 67, 71).

3. An analyzer as described in claim 2, characterized in that the obtaining means (10, 12, 14, 15) includes
—detector means (10) for detecting gamma radiation and providing electrical pulses in accordance with the detected gamma radiation and for providing reference pulses,
—amplifier means (12) located outside said test chamber (5) and electrically connected to said detector means (10) for amplifying said electrical pulses from said detector means (10),
—gain stabilizing meas (14) connected to said amplifyier means (12) for stabilizing the amplitude of said amplified pulses in accordance with the reference pulses,
—multichannel analyzing means (15) connected to said gain stabilizing means (14) for providing a plurality of outputs in accordance with the energy levels of the amplified pulses and, the deriving means (24) includes
—computer means (24) connected to the multichannel analyzing means (15) for providing an output representative of the gamma ray spectra of the materials in the petroleum stream flowing through the test chamber (5) in accordance with the outputs from the multichannel analyzing means (15).

4. An analyzer as described in claim 3, characterized in that
—a recorder (30) is connected to the computer means (24) which provides a record of the gamma ray spectra in accordance with the output from the computer means (24).

**Patentansprüche**

1. Erdölstromanalysator, umfassend
—eine Testkammer (5), durch die ein Erdölstrom oder ein Teil eines solchen strömt,
—eine Einheit (9), die den Erdölstrom in der Testkammer (5) mit schnellen Neutronen bombardiert, die abgebremst werden und anschließend an thermischen Einfangsreaktionen mit im Erdölstrom vorhandenen Stoffen teilnehmen.
—Mittel (10, 12, 14, 15) zum Erzeugen von Gammaenergiespektren der Stoffe aufgrund des Einfangs der thermischen Neutronen durch die Stoffe im Erdölstrom,
—eine Abschirmung (95), die wenigstens einen Teil der Erzeugungsmittel (10, 12, 14, 15) gegenüber von der Bombardiereinheit (9) ausgehenden Neutronen abschirmt, und
—eine Einheit (24), die ein Maß einer Charakteristik des Erdölstroms gemäß den erzeugten Gammaenergiespektren der Stoffe im Erdölstrom ableitet,
—ein Gehäuse (80, 83) zur Aufnahme der Bombardiereinheit (9), der Abschirmung (85) und eines Teils der Erzeugungsmittel (10, 12, 14, 15), wobei das Gehäuse (80, 83) in der Testkammer (5) derart positioniert ist, daß eine Längsachse des Gehäuses (80, 83) durch den Teil der Erzeugungsmittel (10, 12, 14, 15), die Abschirmung (95) und die Bombardiereinheit (9) geht und mit dem axialen Fluß des Erdölstroms in der Testkammer (5) im wesentlichen ausgerichtet ist,
dadurch gekennzeichnet, daß
—die Testkammer (15) aufweist einen Mantel (53, 56, 60, 64, 66, 67, 71), wenigstens zwei an dem Mantel (53, 56, 60, 64, 66, 67, 71) befestigte Zwischenstücke (57, 69) zum Leiten des Erdölstroms oder eines Teils desselben in den bzw. aus dem Mantel, und wenigstens zwei an entgegengestzten Enden des Mantels (53, 56, 60, 64, 66, 67, 71) befestigte Endplatten (50, 73),
—das Gehäuse (80, 83) an einer Endplatte (73) so befestigt ist, daß es von dieser leicht abnehmbar ist, und die eine Endplatte (73) an dem Mantel (53, 56, 60, 64, 66, 67, 71) so befestigt ist, daß die Endplatte (73) und das Gehäuse (80, 83) leicht von dem Mantel (53, 56, 60, 64, 66, 67, 71) abnehmbar sind, und
—das Gehäuse (80, 83) aus Epoxidglass besteht, eine Innenauskleidung (83) aus Boroxid aufweist und solche Länge hat, daß es von der einen Endplatte (73), an der das Gehäuse (80, 83) befestigt ist, bis in Anlage an der anderen Endplatte (50) reicht, so daß das Gehäuse (80, 83) innerhalb des Mantels (53, 56, 60, 64, 66, 67, 71) starr in seiner Lage gehalten ist.

2. Analysator nach Anspruch 1, dadurch gekennzeichnet, daß
—der Mantel (53, 56, 60, 64, 66, 67, 71) einen Innenauskleidung (77) aus Borcarbid und eine weitere Innenauskleidung (79) aus Epoxidglas hat, die mit der Borcarbidauskleidung (77) so angeordnet ist, daß letztere sich zwischen der Epoxidglasauskleidung (79) und dem Mantel (53, 56, 60, 64, 66, 67, 71) befindet.

3. Analysator nach Anspruch 2, dadurch gekennzeichnet, daß die Erzeugungsmittel (10, 12, 14, 15) umfassen
—einen Detektor (10), der Gammastrahlung erfaßt und elektrische Impulse nach Maßgabe der erfaßten Gammastrahlung erzeugt und Bezugsimpulse liefert,
—einen Verstärker (12), der außerhalb der Testkammer (5) angeordnet und mit dem Detektor (10) elektrisch verbunden ist und die elektrischen Impulse vom Detektor (10) verstärkt,
—einen Verstärkungsstabilisator (14), der mit dem Verstärker (12) verbunden ist und die Amplitude der verstärkten Impulse nach Maßgabe der Bezugsimpulse stabilisiert,

—einen Vielkanal-Analysator (15), der mit dem Verstärkungsstabilisator (14) verbunden ist, und mehrere Ausgangssignale nach Maßgabe der Energiepegel der verstärkten Impulse liefert, und ndie Ableitungseinheit (24) umfaßt

—einen Rechner (24), der an den Vielkanal-Analysator (15) angeschlossen ist und nach Maßgabe der Ausgangssignale vom Vielkanal-Analysator (15) ein Ausgangssignal liefert, das für die Gammastrahlenspektren der in dem durch die Testkammer (5) strömenden Erdölstrom enthaltenen Stoffe repräsentativ ist.

4. Analysator nach Anspruch 3, dadurch gekennzeichnet, daß

—ein Schreiber (30) an den Rechner (24) angeschlossen ist und eine Aufzeichnung der Gammastrahlenspektren nach Maßgabe des Ausgangssignals vom Rechner (24) erzeugt.

**Revendications**

1. Analyseur de courant de pétrole comprenant
—une chambre d'essai (5) dans laquelle s'écoule un courant de pétrole ou une partie de ce courant,
—des moyens (9) destinés à bombarder le courant de pétrole, à l'intérieur de la chambre (5) d'essai, avec des neutrons rapides qui sont ralentis et ensuite engagés dans des réactions de capture de neutrons thermiques avec des matières présentes dans le courant de pétrole,
—des moyens (10, 12, 14, 15) destinés à obtenir des spectres d'énergie de rayons gamma des matières en rèponse à la capture des neutrons thermiques par les matières dans le courant de pétrole,
—des moyens de protection (95) destinés à protéger au moins une partie desdits moyens (10, 12, 14, 15) d'obtention des neutrons produits par lesdits moyens de bombardement (9), et
—des moyens (24) destinés à calculer une mesure d'une caractéristique due courant de pétrole en fonction des spectres d'énergie de rayons gamma obtenus des matières dans le courant de pétrole,
—un corps (80, 83) destiné à loger les moyens de bombardement (9), les moyens de protection (95) et ladite partie des moyens d'obtention (10, 12, 14, 15), ledit corps (80, 83) étant disposé dans ladite chambre d'essai (5) de manière qu'un axe longitudinal dudit corps (80, 83) passe à travers ladite partie des moyens d'obtention (10, 12, 14, 15), lesdits moyens de protection (95) et lesdits moyens de bombardement (9), et soit sensiblement aligné avec l'écoulement axial du courant de pétrole dans ladite chambre d'essai (5),
caractérisé en ce que la chambre d'essai (5) comprend
une enveloppe (53, 56, 60, 64, 66, 67, 71), au moins deux moyens adaptateurs (57, 69) fixés à l'enveloppe (53, 56, 60, 64, 66, 67, 71) pour permettre au courant de pétrole, ou à une partie de celui-ci, de pénétrer dans l'enveloppe et d'en sortir, et
au moins deux plaques d'extrémité (50, 73) fixées à des extrémités opposées de ladite enveloppe (53, 56, 60, 64, 66, 67, 71),

—le corps (80, 83) est fixé à une première plaque d'extrémité (73) de manière que le corps (80, 83) puisse être aisément retiré de ladite plaque d'extrémité (73) et la première plaque d'extrémité (73) est fixée à ladite enveloppe (53, 56, 60, 64, 66, 67, 71) de manière que la plaque d'extrémité (73) et le corps (80, 83) puissent être aisément retirés de ladite enveloppe (53, 56, 60, 64, 66, 67, 71), et

—le corps (80, 83) est réalisé en verre-époxy et comporte un revêtement intérieur (83) de carbure de bore et possède une longueur suffisante pour s'étendre de la première plaque d'extrémité (73), à laquelle le corps (80, 83) est fixé, jusqu'en butée contre l'autre plaque d'extrémité (50) afin que le corps (80, 83) soit maintenu rigidement en position à l'intérieur de ladite enveloppe (53, 56, 60, 64, 66, 67, 71).

2. Analyseur selon la revendication 1, caractérisé en ce que
—l'enveloppe (53, 56, 60, 64, 66, 67, 71) comporte un premier revêtement intérieur (77) de carbure de bore et un autre revêtement intérieur (79) de verre-époxy agencé avec le revêtement (77) de carbure de bore de manière que le revêtement (77) de carbure de bore se trouve entre le revêtement (79) de verre-époxy et et ladite enveloppe (53, 56, 60, 64, 66, 67, 71).

3. Analyseur selon la revendication 2, caractérisé en ce que
les moyens d'obtention (10, 12, 14, 15) comprennent
—un des moyens détecteurs (10) destinés à détecter un rayonnement gamma et à produire des impulsions électriques en fonction du rayonnement gamma détecté, et à produire des impulsions de référence,
—des moyens amplificateurs (12) disposés à l'extérieur de ladite chambre d'essai (5) et connectés électriquement auxdits moyens détecteurs (10) afin d'amplifier lesdites impulsions électriques provenant desdits moyens détecteurs (10),
—des moyens (14) de stabilisation de gain connectés auxdits moyens amplificateurs (12) afin de stabiliser l'amplitude desdites impulsions amplifiées en fonction des impulsions de référence,
—des moyens (15) d'analyse à canaux multiples connectés auxdits moyens (14) de stabilisation de gain afin de produire plusieurs signaux de sortie en fonction des niveaux d'énergie des impulsions amplifiées, et
les moyens de calcul (24) comprennent
—un calculateur (24) connecté aux moyens (15) d'analyse à canaux multiples pour produire un signal de sortie représentatif des spectres de rayons gamma des matières présentes dans le courant de pétrole s'écoulant à travers la chambre d'essai (5) en fonction des signaux sortie des moyens (15) d'analyse à canaux multiples.

4. Analyser selon la revendication 3, caractérisé en ce que
—un enregistreur (30) est connecté au calculateur (24) et produit un enregistrement des spectres de rayons gamma en fonction du signal de sortie du calculateur (24).

# FIG. 1

# FIG. 2

FLUID
FLOW
OUT

FLUID
FLOW
IN